(19) Europäisches Patentamt
European Patent Office
Office européen des brevets

(11) **EP 3 153 961 A1**

(12) **DEMANDE DE BREVET EUROPEEN**

(43) Date de publication:
**12.04.2017 Bulletin 2017/15**

(51) Int Cl.:
**G06F 3/06** (2006.01)

(21) Numéro de dépôt: **15306582.6**

(22) Date de dépôt: **08.10.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(71) Demandeur: **The Roberto Giori Company Ltd.
1009 Pully (CH)**

(72) Inventeur: **PINAULT, Francis
34990 JUVIGNAC (FR)**

(74) Mandataire: **Santarelli
49, avenue des Champs-Elysées
75008 Paris (FR)**

(54) **PROCÉDÉ ET SYSTÈME DE SAUVEGARDE RÉPARTIE DYNAMIQUE**

(57) L'invention concerne le domaine informatique, et notamment le stockage réparti d'une donnée sur plusieurs serveurs de stockage. Un procédé de sauvegarde répartie comprend les étapes suivantes : diviser la donnée pour obtenir des blocs de données ; déterminer, pour chaque bloc, un serveur respectif parmi la pluralité de serveurs de stockage ; et mémoriser chaque bloc au niveau du serveur déterminé. Selon l'invention, la détermination du serveur respectif est fonction d'un instant temporel courant. Elle peut être, en outre, fonction d'une clé privée de l'utilisateur. La clé est utilisée pour former un masque. Ce dernier est décalé en fonction de l'instant temporel courant. Puis le masque décalé et son complémentaire sont appliqués respectivement à deux tables de répartition de serveurs afin d'identifier les serveurs à utiliser pour chacun des blocs de données. Les blocs peuvent être changés de serveurs à chaque nouvel instant temporel.

Fig. 3

**Description**

DOMAINE DE L'INVENTION

La présente invention concerne le domaine informatique, et plus particulièrement un système et un procédé de stockage d'une donnée associée à un utilisateur dans un réseau informatique comprenant une pluralité de serveurs de stockage. En d'autres termes, il s'agit d'un stockage ou d'une sauvegarde distribuée ou répartie de données sur un réseau.

CONTEXTE DE L'INVENTION

L'idée d'utiliser un réseau informatique étendu, tel l'Internet, pour sécuriser le stockage de données n'est pas nouvelle. Dans l'article journalistique « Utiliser Internet comme système de stockage réparti » (http://www.lemondeinformatique.fr/ actualites/lire-utiliser-internet-comme-systeme-de-stockage-reparti-22932.html), il était déjà indiqué que l'idée, aussi simple qu'ambitieuse d'une certaine société, consiste à découper en tranches un volume de données à archiver et de répartir leur stockage sur l'ensemble des ressources disponibles sur Internet. Cette approche, baptisée DSG (pour « *dispersed storage grid* ») repose sur un algorithme mis au point au MIT à la fin des années 70. Il permet de découper les données en tranche, et confère à chacune d'entre elle la possibilité de régénérer des segments perdus. La fiabilité du système lui conférerait une disponibilité record : moins d'une heure d'indisponibilité sur un million d'années.

Aujourd'hui, le stockage ou la sauvegarde de données sur le nuage (ou « Cloud » selon la terminologie anglo-saxonne) est largement répandu.

Pour autant, malgré de nombreuses techniques de chiffrement des données, le niveau de sécurité, en terme de confidentialité des données propres à un utilisateur, proposé par les solutions existantes peut s'avérer insatisfaisant. En particulier, une personne malveillante peut tenter de récupérer, sur les serveurs de stockage utilisés, les blocs de données formant une donnée secrète initiale, sans que des contremesures efficaces soient prises notamment parce que la récursivité d'accès à cette donnée peut permettre avec le temps et des dispositifs espions sophistiqués de déjouer les chiffrements de données.

RESUME DE L'INVENTION

Un objectif de la présente invention est ainsi d'améliorer la sécurisation d'une donnée personnelle lors de son stockage réparti sur une pluralité de serveurs.

Dans ce dessein, un premier aspect de la présente invention concerne un procédé de stockage d'une donnée associée à un utilisateur dans un réseau informatique comprenant une pluralité de serveurs de stockage, le procédé comprenant les étapes suivantes :

diviser la donnée pour obtenir une pluralité de blocs de données ;
déterminer, pour chaque bloc de données, un serveur respectif parmi la pluralité de serveurs de stockage ; et
mémoriser chaque bloc de données au niveau du serveur de stockage respectif,
**caractérisé en ce que** la détermination du serveur respectif est fonction d'un instant temporel courant.

Corrélativement, l'invention concerne, selon un deuxième aspect, un système (qui peut être intégré dans un simple terminal utilisateur) de stockage d'une donnée associée à un utilisateur dans un réseau informatique comprenant une pluralité de serveurs de stockage, le système comprenant au moins un microprocesseur configuré pour exécuter, dans un environnement d'exécution du système, les étapes suivantes :

diviser la donnée pour obtenir une pluralité de blocs de données ;
déterminer, pour chaque bloc de données, un serveur respectif parmi la pluralité de serveurs de stockage ; et
mémoriser chaque bloc de données au niveau du serveur de stockage respectif,
**caractérisé en ce que** la détermination du serveur respectif est fonction d'un instant temporel courant.

Le procédé ou le système selon l'invention permet ainsi d'accroître la sécurisation de données personnelles, par exemple une donnée confidentielle, chiffrée ou non, ou des programmes personnels.

Cette sécurisation accrue est obtenue par la dépendance au temps du serveur de stockage utilisé pour stocker chaque bloc de donnée résultant de la division de la donnée personnelle. Il en résulte que le serveur de stockage utilisé pour mémoriser un bloc de données particulier peut varier dans le temps, c'est-à-dire qu'il est déterminé selon une ou plusieurs lois de répartition dynamique. La tâche de localisation et de récupération des blocs de données est ainsi largement complexifiée pour une personne malintentionnée.

Des caractéristiques optionnelles du procédé selon l'invention sont par ailleurs définies dans les revendications dépendantes. Le système selon l'invention peut également comprendre des moyens configurés pour mettre en oeuvre ces caractéristiques optionnelles.

Dans un mode de réalisation, un nouveau serveur de stockage respectif est déterminé, à chaque nouvel instant temporel, pour chaque bloc de données, de sorte à mémoriser le bloc de données au niveau d'un nouveau serveur de stockage à chaque nouvel instant temporel.

Cette disposition précise la dépendance, au temps, de la détermination du serveur à utiliser.

Dans un mode de réalisation particulier, le procédé comprend, en outre, les étapes suivantes en réponse à une requête d'accès à la donnée associée à l'utilisateur :

identifier des serveurs de stockage mémorisant, à un instant temporel donné, les blocs de données ;

récupérer les blocs de données depuis les serveurs de stockage respectifs ainsi identifiés, pour reformer ladite donnée ; et

en cas de détection d'une erreur sur la donnée reformée à partir des blocs de données récupérés, identifier de nouveaux serveurs de stockage mémorisant, à un instant temporel suivant (celle suivant immédiatement l'instant temporel donné), les blocs de données, puis récupérer les blocs de données depuis les nouveaux serveurs de stockage respectifs ainsi identifiés, pour reformer ladite donnée.

Cette disposition permet de traiter la discontinuité de stockage des blocs de données lors d'un changement d'instant temporel. En effet, selon que la requête d'accès à la donnée reçue aux environs de ce changement d'instant temporel soit traitée plus ou moins vite, les blocs de données peuvent avoir été déplacés d'un serveur à l'autre, selon le nouveau schéma de stockage réparti applicable à l'instant T+1.

Ainsi, la donnée est reconstituée en utilisant le schéma applicable à l'instant T, et si cette donnée est erronée (défaut de cohérence, erreur sur un critère d'identification comme par exemple une identité utilisateur dans la donnée reconstituée, etc.), on procède à une reconstitution en utilisant le schéma applicable à l'instant T+1.

Dans un autre mode de réalisation, la détermination du serveur respectif est en outre fonction d'une clé binaire privée associée à l'utilisateur. Il peut s'agir de n'importe quelle clé cryptographique associée à l'utilisateur, qui est utilisée dans sa forme binaire.

Cette disposition permet de crypter le schéma de répartition des serveurs de stockage en fonction de chaque utilisateur, et ainsi complexifie, pour une personne malveillante, les opérations à mettre en oeuvre pour identifier la localisation de stockage de chacun des blocs de données.

Selon un mode de réalisation particulier, l'étape de détermination des serveurs de stockage comprend une étape consistant à appliquer la clé binaire comme masque à une première table de répartition des serveurs pour identifier des serveurs de stockage à utiliser pour une partie des blocs de données respectifs, ladite première table de répartition des serveurs associant un serveur à chaque bloc de données.

La connaissance de la clé devient ainsi indispensable à l'identification de chaque serveur de stockage utilisé.

Selon une caractéristique particulière, l'étape de détermination des serveurs de stockage comprend en outre une étape consistant à appliquer un complémentaire de la clé binaire comme masque à une deuxième table de répartition des serveurs pour identifier des serveurs de stockage à utiliser pour les autres blocs de données respectifs. Notamment, ladite deuxième table de répartition des serveurs peut associer un serveur à chaque bloc de données et peut être formée à partir d'une même table élémentaire que la première table de répartition des serveurs. Par exemple, les tables de répartition sont générées par répétition (et concaténation) de la table élémentaire, la deuxième table de répartition étant la continuité de la première table de répartition eu égard à la répétition de la table élémentaire.

Ces dispositions permettent de déterminer les serveurs de stockage à utiliser de façon très sécurisée.

Selon un mode de réalisation particulier, le masque formé de la clé binaire est décalé relativement à la première ou deuxième table de répartition des serveurs d'un nombre de positions fonction de l'instant temporel courant, avant d'être appliqué à la première ou deuxième table de répartition des serveurs. L'instant temporel courant est ainsi utilisé comme référence perturbatrice dans l'application du masque (clé binaire de l'utilisateur), augmentant la sécurisation du stockage réparti de la donnée personnelle.

Selon un autre mode de réalisation particulier, le masque est formé d'une répétition (éventuellement partielle) de la clé binaire de sorte à atteindre la taille de la première ou deuxième table de répartition des serveurs, c'est-à-dire le nombre de blocs de données à stocker.

Une personne malveillante devra donc connaître la clé de l'utilisateur pour tenter de localiser les serveurs où sont stockés chacun des blocs de données.

Selon encore un autre mode de réalisation particulier, le procédé comprend en outre une étape de détermination d'une table élémentaire de répartition des serveurs par duplication de laquelle la ou les tables de répartition des serveurs sont obtenues,

procédé dans lequel l'étape de détermination de la table élémentaire est fonction d'un indice de performance associé

## EP 3 153 961 A1

à chaque serveur de stockage et d'un indice de confiance associé à la localisation géographique de chaque serveur de stockage.

Ainsi, une stratégie de priorisation de l'utilisation de certains serveurs peut être mise en oeuvre, afin par exemple de favoriser les serveurs performants et/ou localisés dans des zones à faible risque géographique (par exemple risque sismique ou risque géopolitique).

Selon une caractéristique particulière, la longueur de la table élémentaire est fonction de la somme de poids associés aux serveurs de stockage, le poids associé à un serveur de stockage étant déterminé à partir des indices de performance et de confiance du serveur de stockage considéré.

Selon une autre caractéristique particulière, l'étape de détermination de la table élémentaire comprend les étapes suivantes :

déterminer, pour chaque serveur de stockage, une fréquence de répétition d'une occurrence (par exemple via un identifiant) du serveur de stockage dans la table élémentaire en fonction du poids associé audit serveur de stockage considéré ;

remplir la table élémentaire en répétant, pour chaque serveur itérativement considéré et en fonction de sa fréquence de répétition déterminée, une occurrence du serveur au sein de la table élémentaire jusqu'à atteindre un nombre de répétition égal au poids associé au serveur considéré.

La table élémentaire permet ainsi d'obtenir une répartition complexe et entrelacée des serveurs, dans des proportions égales à leurs poids respectifs, c'est-à-dire à leurs indices de confiance et de performance. Aussi, une telle table élémentaire est complexe à recréer pour une personne malveillante, tout en garantissant une équité entre les serveurs compte tenu de leurs caractéristiques.

A noter que lors de la formation de la table élémentaire, si une position (dans la table élémentaire) est déjà occupée par une occurrence d'un serveur de stockage lors d'une nouvelle répétition d'un autre serveur de stockage, on peut décider de décaler l'occurrence de cet autre serveur de stockage à la prochaine position libre, puis de recommencer la répétition à partir de cette nouvelle position. Pour atteindre le nombre de répétitions/occurrences souhaité alors que la fin de la table élémentaire est atteinte, il peut être prévu de poursuivre la répétition en bouclant à nouveau sur le début de la table élémentaire. Par exemple, si la longueur de la table élémentaire équivaut la somme des poids, il est nécessaire, pour remplir toute la table élémentaire, que chacun des serveurs soit présent dans un nombre d'occurrences égal à son propre poids.

Dans un mode de réalisation de l'invention, l'étape de division de la donnée comprend les étapes suivantes :

diviser la donnée en des blocs élémentaires de données ;
dupliquer les blocs élémentaires en des blocs dupliqués ;
entrelacer les blocs dupliqués de sorte à obtenir ladite pluralité de blocs de données.

Cette disposition permet d'introduire une redondance des blocs élémentaires formant la donnée personnelle initiale, et par voie de conséquence permet d'améliorer la fiabilité de stockage dans le système.

## BREVE PRESENTATION DES FIGURES

D'autres particularités et avantages de l'invention apparaîtront encore dans la description ci-après, illustrée par les dessins ci-joints, dans lesquels :

- la **figure 1** illustre un exemple d'architecture matérielle dans laquelle la présente invention peut être mise en oeuvre, notamment sous forme de programmes informatiques ;
- la **figure 2** illustre un exemple de réseau informatique comprenant une pluralité de serveurs de stockage dans lequel l'invention peut être mise en oeuvre ;
- la **figure 3** illustre, à l'aide d'un ordinogramme, des étapes générales d'un procédé de sauvegarde répartie d'une donnée selon des modes de réalisation de l'invention ;
- la **figure 4** illustre, sous forme d'ordinogramme, des étapes pour la détermination de serveurs de stockage du procédé de la **figure 3 ;**
- la **figure 5** illustre un exemple de mise en oeuvre des étapes de la **figure** 4 ;
- la **figure 6** illustre, sous forme d'ordinogramme, des étapes pour la détermination d'une table élémentaire du procédé de la **figure 3 ;**
- la **figure 7** illustre un exemple de mise en oeuvre des étapes de la **figure 6 ;** et
- la **figure 8** illustre, sous forme d'ordinogramme, un exemple d'étapes générales d'un procédé d'accès à une donnée sauvegardée selon le procédé de la **figure 3.**

## DESCRIPTION DETAILLEE DE MODES DE REALISATION DE L'INVENTION

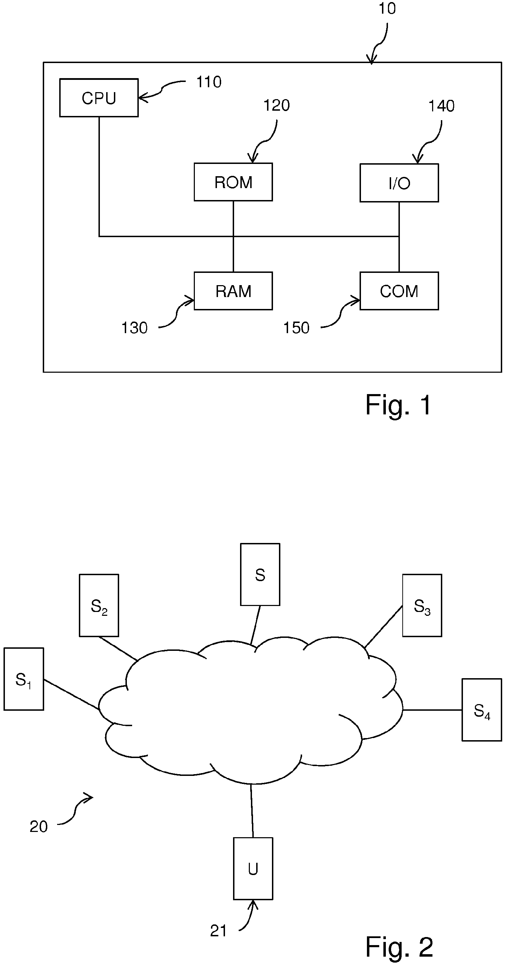

La **figure 1** illustre un exemple d'architecture matérielle dans laquelle la présente invention peut être mise en oeuvre, notamment sous forme de programmes informatiques. A titre d'exemple, cette architecture matérielle peut faire partie d'un dispositif ou terminal utilisateur, tel qu'un ordinateur embarqué ou non, ordinateur portable, terminal mobile, une tablette mobile, ou faire partir d'un serveur offrant des services de sauvegarde répartie de données et d'accès à ces données.

L'architecture matérielle 10 comprend notamment un bus de communication 100 auquel sont reliées :

- une unité de traitement 110, notée CPU (pour *Central Processing Unit*), pouvant comporter un ou plusieurs processeurs ;
- au moins une mémoire non volatile 120 par exemple ROM (pour *Read Only Memory*), EEPROM (pour *Electrically Erasable Read Only Memory*) ou encore Flash, pour stocker des programmes informatiques pour la mise en oeuvre de l'invention et d'éventuels paramètres utilisé pour celle-ci ;
- une mémoire vive 130 ou mémoire cache ou mémoire volatile par exemple RAM (pour *Random Access Memory*), configurée pour stocker le code exécutable de procédés selon des modes de réalisation de l'invention, et pour stocker des registres adaptés à mémoriser, au moins temporairement, des variables et paramètres nécessaires à la mise en oeuvre de l'invention selon des modes de réalisation ;
- une interface 140 d'entrées/sorties I/O (pour *Input/Output*), par exemple un écran, un clavier, une souris ou un autre dispositif de pointage tel qu'un écran tactile ou une télécommande permettant à un utilisateur d'interagir avec le système via une interface graphique ; et
- une interface de communication COM 150 adaptée à échanger des données par exemple avec des serveurs de stockage via un réseau informatique ou de communication.

Les codes d'instructions du programme stocké en mémoire non-volatile 120 sont chargés en mémoire RAM 130 en vue d'être exécutés par l'unité de traitement CPU 110.

La mémoire non-volatile 120 stocke également des informations confidentielles de l'utilisateur, par exemple une clé privée sous forme binaire. Bien entendu, afin d'améliorer la protection d'une telle clé privée, celle-ci peut être stockée dans un élément sécurisé (SE pour *Secure Element*) type carte à puce, équipant le système selon cette architecture matérielle ou encore sur un HSM (Hardware Security Module).

La présente invention s'inscrit dans le cadre de la sauvegarde (ou stockage) répartis de données sur des serveurs de stockage d'un réseau de communication, typiquement un réseau informatique étendu, tel que l'Internet.

La **figure 2** illustre un exemple de réseau informatique 20 comprenant une pluralité de M serveurs de stockage $S_x$. Dans l'exemple non limitatif de la figure, quatre (M=4) serveurs de stockage $S_1$, $S_2$, $S_3$ et $S_4$ sont représentés. Les serveurs sont synchronisés sur une même horloge de référence.

Un terminal utilisateur 21, présentant l'architecture matérielle de la **figure 1,** permet à un utilisateur de solliciter la sauvegarde d'une donnée personnelle, parfois confidentielle, cryptée ou non, et d'accéder à cette donnée personnelle une fois celle-ci stockée de façon répartie dans le réseau 20.

Le terminal utilisateur 21 peut mettre en oeuvre la présente invention pour gérer le stockage réparti d'une telle donnée personnelle et son accès ultérieur. En variante, le terminal utilisateur 21 peut accéder à un service de sauvegarde distribuée d'une donnée et d'accès ultérieur à cette donnée, proposé par un serveur S du réseau 20. Dans les deux cas, l'ensemble des paramètres (indices de confiance et de performance, clés utilisateur, etc.) discutés par la suite peuvent être stockés sur un tel serveur S, et être récupérés, si nécessaire, par les terminaux utilisateurs.

Les principes généraux de sauvegarde répartie d'une donnée incluent de diviser la donnée pour obtenir une pluralité de blocs de données ; de déterminer, pour chaque bloc de données, un serveur respectif parmi la pluralité de serveurs de stockage ; et de mémoriser chaque bloc de données au niveau du serveur de stockage respectif.

Dans ce contexte, la présente invention prévoit d'accroître la protection, et donc la sécurité, de la donnée ainsi stockée selon ces solutions, en effectuant une détermination de chaque serveur respectif en fonction d'un instant temporel courant, c'est-à-dire en fonction du temps.

Il en résulte une localisation de chaque bloc de données qui peut varier dans le temps, rendant leur récupération par une personne malveillante plus difficile.

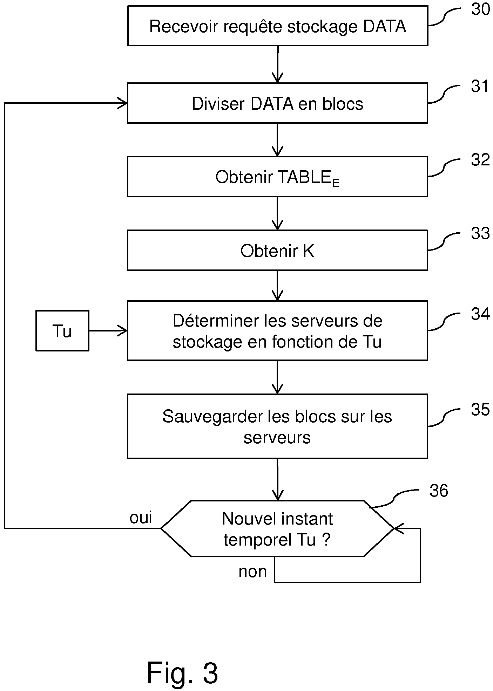

La **figure 3** illustre, à l'aide d'un ordinogramme, des étapes générales d'un procédé exemplaire selon des modes de réalisation de l'invention. Ces étapes sont mises en oeuvre dans un système selon l'invention, lequel peut être le terminal utilisateur 21 ou le serveur S de la **figure 2.**

A l'étape 30, une requête de stockage d'une donnée personnelle DATA est reçue de l'utilisateur (via le terminal utilisateur 21 le cas échéant).

Cette donnée est personnelle en ce qu'elle est attachée à un utilisateur ou groupe d'utilisateurs. Elle peut être constituée d'une pluralité de données élémentaires, par exemples confidentielles. Typiquement, la donnée personnelle est chiffrée.

La donnée personnelle DATA forme un fichier de taille LENGTH.

A l'étape 31, la donnée DATA est divisée pour obtenir une pluralité de blocs de données. Cette étape se décompose en trois sous-étapes : diviser la donnée DATA en des blocs élémentaires de données $D_1$-$D_{Nb}$ ; dupliquer les blocs élémentaires en des blocs dupliqués $D'_1$-$D'_{Nb}$, pour procurer un niveau de redondance suffisant ; et entrelacer les blocs dupliqués pour améliorer la fiabilité du mécanisme de stockage.

La donnée DATA peut être divisée en Nb blocs de taille constante Lfixe, applicable à toute donnée DATA dans le temps : Nb= [ LENGTH / Lfixe ], où [] est la fonction retournant la partie entière par excès.

En variante, la donnée DATA peut être divisée en une pluralité de blocs de même taille Lvar, cette taille de bloc étant variable en ce qu'elle peut dépendre d'un ou plusieurs paramètres, par exemple choisis parmi les paramètres suivants : la taille LENGTH de la donnée DATA, l'utilisateur, l'opérateur du service de sauvegarde répartie et d'accès aux données, etc. Le nombre de blocs obtenus est alors :

$$Nb= \lceil LENGTH / Lvar \rceil.$$

L'utilisateur de longueurs variables améliore encore la sécurisation de la donnée à sauvegarder.

A titre d'exemple, la variabilité de la taille du bloc en fonction de la taille LENGTH de la donnée DATA peut suivre l'une des formules suivantes :

$$Lvar = \lceil Lmin + (LENGTH/Nbmax) \rceil,$$

où Nbmax est une paramètre prédéfini et Lmin est une taille entière minimale prédéfinie. Dans ce cas, le nombre Nb de blocs de données obtenus tend vers Nbmax plus la donnée DATA est de grande taille ;

$$Lvar = \sqrt{(LENGTH)} \qquad pour\ LENGTH < Nbmax^2$$

$$Lvar = LENGTH/Nbmax \qquad pour\ LENGTH \geq Nbmax^2,$$

auquel cas le nombre Nb de blocs de données obtenus vaut $min([\sqrt{(LENGTH)}], Nbmax)$, et tend donc vers Nbmax plus la donnée DATA est de grande taille.

A titre d'exemple, la variabilité de la taille du bloc en fonction de l'utilisateur peut consister à utiliser un identifiant unique ID de l'utilisateur (par exemple un numéro de sécurité sociale, un numéro de passeport ou carte d'identité, etc.) que l'on normalise dans un intervalle prédéfini [0 ;Nbmax], pour calculer cette longueur :

Nb = ID - Nbmax.[ID/Nbmax], où ⌊ ⌋ est la fonction retournant la partie entière par défaut, et du coup :

$$Lvar = \lceil LENGTH/Nb \rceil = \lceil LENGTH/(ID-Nbmax.\lfloor ID/Nbmax \rfloor) \rceil.$$

En variante, un nombre entier de l'intervalle [0 ;Nbmax] peut être attribué de façon aléatoire à chaque utilisateur et servir à définir la valeur Nb. La taille variable découle alors directement : Lvar = [LENGTH/Nb].

A titre d'exemple, la variabilité de la taille du bloc en fonction d'un opérateur peut consister à prévoir différents niveaux (valeur Nb) de division de la donnée en fonction d'options d'abonnement ou de performance. Le recours à une division en un grand nombre de blocs s'avère plus sécuritaire, mais nécessite plus de calculs comme décrits par la suite. Aussi, un tel niveau de division peut être réservé aux abonnés premium.

Bien entendu ces différents exemples peuvent être combinés entre eux pour produire des longueurs variables de découpage de la donnée DATA en blocs de données $D_1$-$D_{Nb}$.

De façon optionnelle, ces blocs de données $D_1$-$D_{Nb}$ peuvent être dupliqués pour fournir une redondance des données, fiabilisant la reconstitution de la donnée DATA. Dans un mode de réalisation, la loi de redondance peut être fixe, définissant le nombre de duplications RD par un nombre fixe, par exemple 3.

Selon un autre mode de réalisation, la loi de redondance appliquée peut être variable en ce qu'elle peut dépendre d'un ou plusieurs paramètres, par exemple fonction d'indices de confiance $CS_i$ attribués aux M serveurs $S_i$.

A titre d'exemple, le nombre entier de duplications peut valoir :

$$RD = RDmax + moy(CS_i)_{i=1..M} - \lfloor (\textstyle\sum CS_i)/M + 1 \rfloor$$

avec $RDmin \leq RD \leq RDmax$ ; $RDmin$ et $RDmax$ étant deux valeurs prédéfinies ; et $moy()$ étant la fonction qui retourne la valeur médiane ou moyenne.

Compte tenu du nombre RD de duplications, $Nb'=RD.Nb$ blocs $D'_1$-$D'_{Nb'}$ sont obtenus à partir des n blocs élémentaires $D_1$-$D_{Nb}$.

De façon optionnelle également, les m blocs $D'_1$-$D'_{Nb'}$ peuvent être entrelacés afin d'améliorer la fiabilité du système de sauvegarde eu égard à des erreurs se produisant dans le traitement des blocs $D'_1$-$D'_{Nb'}$.

A titre d'exemple, l'entrelacement des blocs de données $D'_1$-$D'_{Nb'}$ produits peut être monotone de profondeur P, signifiant que chaque groupe de P blocs élémentaire $D_i$ est dupliqué RD fois. Par exemple, pour RD=3 et P=4, on considère chaque groupe de 4 blocs successivement comme suit :

$D_1D_2D_3D_4\ D_1D_2D_3D_4\ D_1D_2D_3D_4\ D_5D_6D_7D_8\ D_5D_6D_7D_8\ D_5D_6...$

En variante, un entrelacement complexe de profondeur P peut être mis en oeuvre, signifiant que pour chaque groupe de P blocs élémentaires, leurs duplications sont mélangées. Par exemple pour RD=3 et P=6 :

$D_1D_4D_2D_5D_3D_6\ D_5D_2D_4D_1D_6D_3\ D_6D_1D_3D_4D_2D_5\ D_8D_{10}D_7D_9D_{11}D_{12}...$

Suite à l'étape 31, une table élémentaire de répartition des serveurs Si, notée $TABLE_E$, est obtenue à l'étape 32.

La table élémentaire $TABLE_E$ consiste en une pluralité ordonnée de $L_{TABLE}$ entrées, chacune identifiant un des serveurs $S_i$.

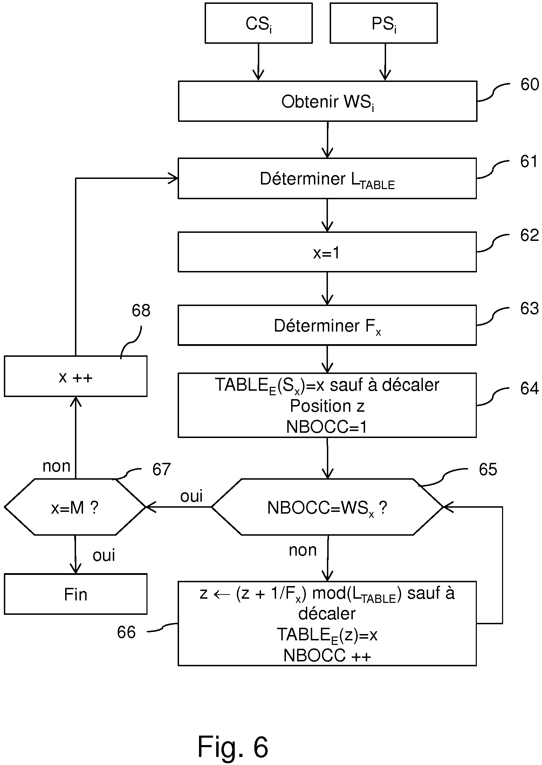

Cette table élémentaire $TABLE_E$ peut être une table prédéfinie récupérée en mémoire non volatile du système. En variante, elle peut être déterminée selon le procédé de la **figure 6** décrite ci-après afin de notamment favoriser des serveurs de confiance et/ou performants.

Un exemple de table élémentaire de longueur $L_{TABLE}=21$ est reproduit ici aux seules fins d'illustration, où seul est reporté l'indice i du serveur $S_i$ lorsque M=4 :

| 1 | 2 | 3 | 4 | 3 | 1 | 3 | 4 | 2 | 3 | 1 | 3 | 4 | 3 | 4 | 1 | 2 | 3 | 4 | 3 | 4 |
|---|---|---|---|---|---|---|---|---|---|---|---|---|---|---|---|---|---|---|---|---|

Suite à l'étape 32, une clé privée de l'utilisateur est obtenue à l'étape 33. Il s'agit de préférence d'une clé cryptographique obtenue à partir d'une courbe elliptique. Cette clé, notée K, est mémorisée de façon sécurisée dans le système mettant en oeuvre l'invention, par exemple à l'aide d'un élément sécurisé type carte à puce.

Comme exposé par la suite, la clé privée K est utilisée pour déterminer les serveurs à utiliser pour mémoriser chaque bloc $D'_i$.

Puis à l'étape 34, un serveur de stockage respectif est déterminé, pour chaque bloc de données $D'_i$, parmi la pluralité de serveurs de stockage, en fonction d'un instant temporel courant Tu. L'instant temporel courant est défini avec une précision directement dépendante d'une unité temporelle choisie.

Par exemple, l'instant temporel peut être défini par l'heure courante s'il est choisi une unité temporelle de l'ordre de l'heure. Dans ce cas, la journée est découpée en 24 instants successifs, identifiés par leurs heures respectives Tu = 0 à 23. Comme le stockage selon l'invention dépend du temps, une telle unité temporelle permet de modifier la localisation de stockage des blocs $D'_i$ vingt-quatre fois par jour.

En variante, on peut utiliser une unité temporelle de l'ordre du jour, de sorte à modifier la localisation de stockage des blocs $D'_i$ trente ou trente et une fois par mois.

Ces unités temporelles proposées offrent l'avantage d'être très longues par rapport au temps de traitement des étapes 31 à 35 permettant de déterminer de nouvelles localisations pour le stockage des blocs de données. En effet, un ratio supérieur à 1000 (un tel traitement par des moyens informatiques prenant généralement moins de quelques secondes) est ainsi obtenu, permettant de réduire les risques d'ambiguïté relatifs au passage d'une transition d'un instant temporel au suivant, lors de la réception d'une requête d'accès à la donnée DATA.

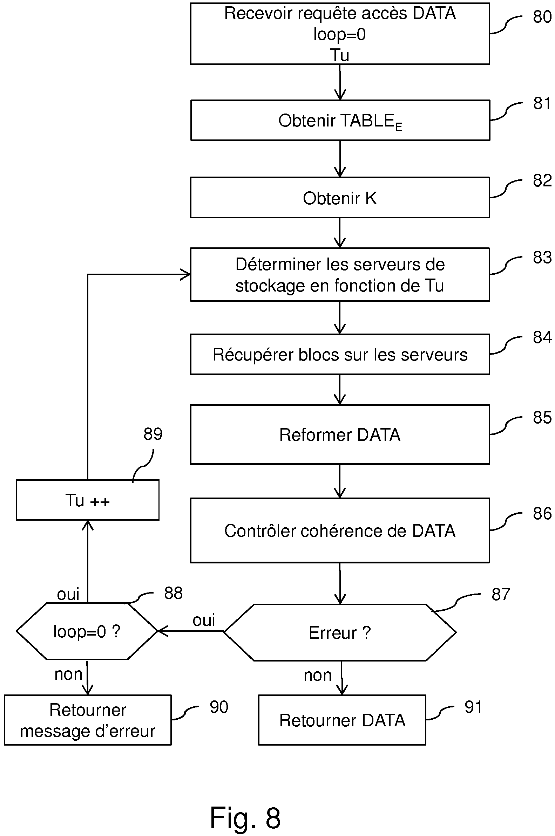

Toutefois, des mécanismes permettant de gérer ces risques peuvent être mis en oeuvre comme décrits par la suite en référence à la **figure 8.**

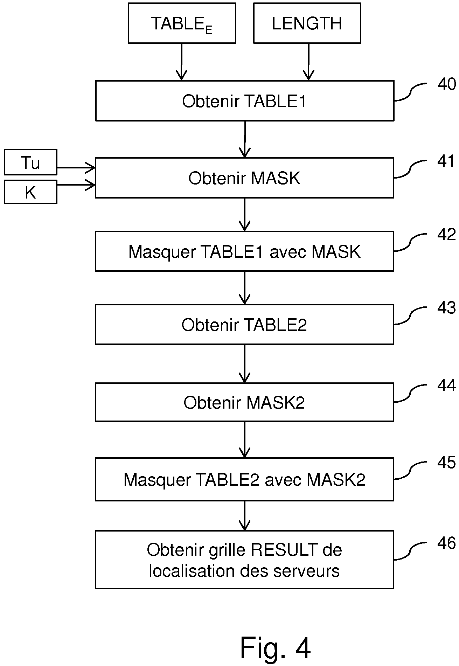

L'étape 34, dont un mode de réalisation est décrit plus en détails ci-après en référence à la **figure 4,** permet ainsi d'identifier un serveur de stockage pour chaque bloc de données $D'_i$ issue de la division de la donnée initiale DATA, et ce en fonction de l'instant temporel courant Tu.

Il s'ensuit, à l'étape 35, le stockage proprement dit de chaque bloc de données au niveau du serveur de stockage respectif ainsi déterminé. Des techniques classiques de communications sécurisées avec les serveurs de stockage $S_i$ sont préférentiellement mises en oeuvre.

Le procédé se poursuit à l'étape 36 où le système attend le prochain instant temporel, par exemple le début de l'heure suivante ou du jour suivant. Lorsqu'un nouvel instant temporel est atteint, les étapes 31 à 35 sont réitérées pour déterminer un nouveau serveur de stockage respectif pour chaque bloc de données $D'_i$, et ainsi mémoriser le bloc de données au niveau du nouveau serveur de stockage pendant ce nouvel instant temporel. De préférence, les blocs de données sont effacés des anciens serveurs de stockage sur lesquels ils étaient stockés pendant l'ancien instant temporel qui vient de se terminer.

On voit ainsi que la sauvegarde répartie de la donnée DATA par blocs évolue dynamiquement, rendant la tâche de localisation des blocs de données $D'_i$ difficile pour une personne malintentionnée.

A noter que la nouvelle exécution des étapes 31, 32 et 33 peut simplement consister à récupérer le résultat d'une exécution précédente de ces étapes, lorsque celles-ci ne font pas intervenir l'instant temporel courant comme paramètre (par exemple la table élémentaire de répartition peut évoluer dans le temps).

L'étape 35 est, elle, dépendante de l'instant temporel courant, garantissant que les serveurs de stockage identifiés pour chaque bloc de données à sauvegarder évoluent dans le temps.

La **figure 4** illustre une réalisation de l'étape 34 de détermination des serveurs de stockage pour sauvegarder les blocs de données $D'_i$ à l'instant temporel courant Tu. Cette détermination tient compte, outre de l'instant temporel courant Tu, de la clé privée K, de la table élémentaire de répartition $TABLE_E$ et de la taille LENGTH de la donnée DATA à sauvegarder.

Une première étape 40 consiste à obtenir une première table de répartition TABLE1 à partir de la table élémentaire $TABLE_E$, par duplication de cette dernière afin d'obtenir une table TABLE1 de longueur égale à Nb' (c'est-à-dire une table TABLE1 de même longueur que le nombre de blocs de données $D'_i$ à sauvegarder).

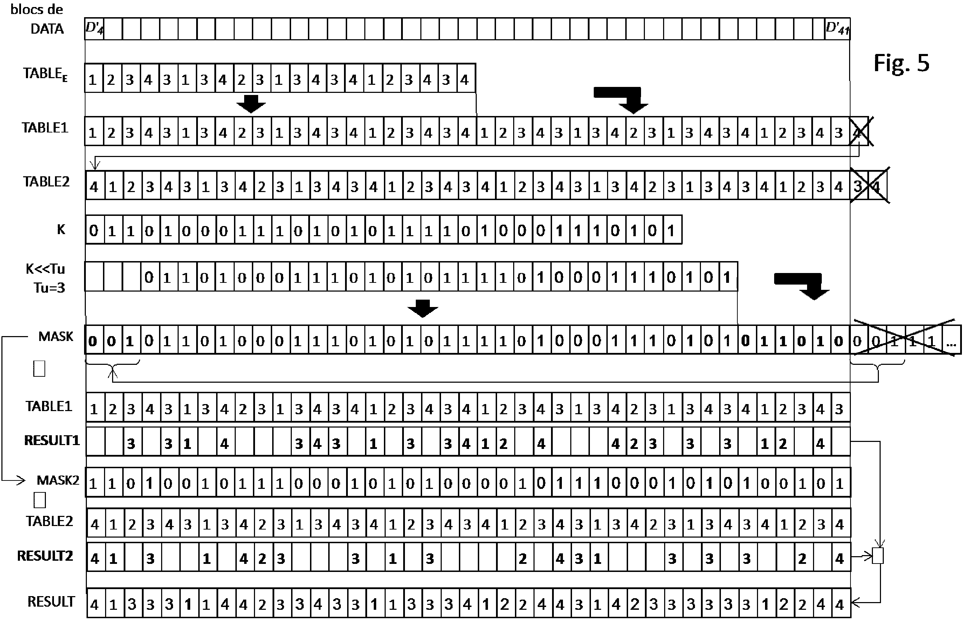

La **figure 5** illustre un exemple de table élémentaire $TABLE_E$ et de la première table de répartition TABLE1 ainsi obtenue, pour M=4 (quatre serveurs), avec 41 blocs $D'_i$.

Puis, l'étape suivante 41 consiste à obtenir un masque binaire MASK à partir de la clé privée K et de l'instant temporel courant Tu. Comme ce masque MASK sera appliqué à la première table de répartition TABLE1, il présente la même taille Nb' que celle-ci.

Dans l'exemple de la **figure 5,** la clé privée K est utilisée sous sa forme binaire (suite de '1' et de '0'), ici une clé de 32 bits. Puis, le masque MASK est formé par la répétition de la clé binaire K, jusqu'à atteindre la taille Nb' de la première table de répartition des serveurs. Sur la figure, les neuf bits en gras sont issus d'une répétition de la clé K.

Puis, à l'étape 42, le masque MASK est appliqué à la première table de répartition des serveurs TABLE1 pour identifier des serveurs de stockage à utiliser pour une partie des blocs de données respectifs $D'_i$. Selon des modes de réalisation, c'est à cette étape que l'instant temporel courant Tu est pris en compte pour perturber l'identification des serveurs de stockage à utiliser.

Notamment, il peut être prévu de décaler le masque MASK relativement au début de la première table de répartition des serveurs TABLE1 d'un nombre de positions fonction de l'instant temporel courant Tu, avant d'être appliqué à cette table de répartition des serveurs.

Comme montré sur la **figure 5,** le masque MASK est décalé de Tu positions avant application à la table TABLE1 (décalage indiqué par K<<Tu); et le résultat RESULT1 de cette opération de masquage (les '1' du masque identifient les serveurs de la table TABLE1 à conserver) identifie seulement une partie des serveurs de stockage à utiliser.

A l'étape 43, on obtient une deuxième table de répartition des serveurs TABLE2 de taille Nb' à partir de la table élémentaire $TABLE_E$ par duplication de cette dernière. Afin d'obtenir une table TABLE2 différente de la première table TABLE1, la deuxième table de répartition peut simplement être la continuité de la première table de répartition eu égard à la répétition de la table élémentaire, comme illustré sur la **figure 5.**

Puis, à l'étape 44, un second masque MASK2 formé par exemple du complémentaire binaire (bit à bit) du premier masque MASK est obtenu. Le second masque a également une taille égale à Nb'.

A l'étape 45, le second masque MASK2 est appliqué à la deuxième table de répartition TABLE2 de la même façon qu'à l'étape 42, de sorte à identifier les serveurs de stockage à utiliser pour les autres blocs de données $D'_i$ (ceux pour lesquels l'étape 42 n'a pas pu identifier de tels serveurs). En effet, l'utilisation du complémentaire du premier masque garantit qu'au final chacun des blocs $D'_i$ se voit associé un serveur de stockage respectif.

La **figure 5** identifie le résultat de cette opération par la référence RESULT2.

Bien entendu, d'autres approches peuvent être mises en oeuvre comme l'utilisation d'autres masques générés à partir de la clé privée K et de l'instant Tu, et la répétition d'opérations de masquage tant que l'ensemble des blocs de données $D'_i$ ne s'est pas vu attribué des serveurs de stockage respectifs.

Le processus de la **figure 4** se termine à l'étape 46 par la fusion des résultats RESULT1 et RESULT2 des opérations de masquage, de sorte à obtenir une grille RESULT de localisation des Nb' serveurs de stockage.

Cette grille identifie donc le serveur de stockage $S_i$ à utiliser pour chacun des Nb' blocs de données $D'_i$.

On décrit maintenant, en référence à la **figure 6,** une réalisation de l'étape 32 de détermination de la table élémentaire de répartition des serveurs TABLE$_E$ par duplication de laquelle les tables de répartition des serveurs TABLE1 et TABLE2 sont obtenues.

Dans ce procédé, l'étape de détermination de la table élémentaire est fonction d'un indice de performance associé à chaque serveur de stockage et d'un indice de confiance associé à la localisation géographique de chaque serveur de stockage.

Aussi, on suppose un ensemble de propriétés rattachées aux serveurs Si de la **figure 2.**

Chaque serveur Si est associé à une localisation géographique LS$_{j=1...N}$. Deux serveurs peuvent avoir la même localisation LS$_j$, d'où N ≤ M.

Un indice de confiance CS$_j$ est associé à chaque localisation LS$_j$. Cette indice de confiance est représentatif d'une stabilité locale eu égard à l'accessibilité de serveurs qui y sont localisés. Par exemple, cet indice de confiance peut être établi comme dans le brevet EP 2 433 216, par exemple sur une échelle de 0 (confiance faible) à CS$_{max}$=10 (confiance forte), tenant compte de risques sismiques, d'inondation, géopolitiques, etc. pour la localisation considérée. Bien entendu, d'autres plages de valeurs sont possibles.

Chaque serveur de stockage Si se voit donc associé indirectement un indice de confiance CS$_i$ lié à sa localisation géographique.

De plus, un indice de performance PS$_i$ est associé à chaque serveur de stockage Si en fonction par exemple de la performance d'accès à ce serveur et/ou de la performance du serveur lui-même.

Il existe un grand nombre de techniques permettant d'évoluer les performances d'un serveur, notamment en termes de performances de stockage, performances de mémoire, performances de processeur, performances de réseau et performances de processus. Aussi elles ne seront pas décrites en détails par ici.

L'indice de performance PS$_i$ est de préférence établi sur une échelle allant de 0 (peu performant) à PS$_{max}$=10 (très performant). Bien entendu, d'autres valeurs sont possibles.

A noter que l'indice de performance PS$_i$ peut varier dans le temps : PS$_i$=f(Tu), auquel cas par exemple l'étape 32 est re-exécutée entièrement à chaque nouvel instant temporel (après l'étape 36).

Comme illustré sur la **figure 6,** l'étape de détermination de la table élémentaire de répartition des serveurs TABLE$_E$ débute par une étape 60 d'obtention d'un poids WS$_i$ associé à chaque serveur de stockage S$_i$. Ce poids peut notamment être représentatif des confiance et performance associées. Aussi, le poids WS$_i$ associé à un serveur de stockage S$_i$ peut être déterminé à partir des indices de performance et de confiance du serveur de stockage considéré, par exemple par combinaison des indices CS$_i$ et PS$_i$ associés à S$_i$.

Par exemple : WS$_i$ = (CS$_i$.PS$_i$)/(CS$_{max}$.PS$_{max}$) pour un poids variant de 0 à 1.

En variante, pour obtenir un poids variant entre 0 et CS$_{max}$ ou entre 0 et PS$_{max}$, on peut utiliser une des formules suivantes :

$$WS_i = (CS_i.PS_i)/PS_{max},$$

$$WS_i = (CS_i.PS_i)/CS_{max}.$$

En outre, si CS$_{max}$ = PS$_{max}$, la formule suivante peut être utilisée pour définir une valeur moyenne entre performance et confiance des serveurs de stockage :

$$WS_i = (CS_i+PS_i)/2.$$

Disposant des poids WS$_i$, l'étape 61 consiste à déterminer la longueur L$_{TABLE}$ de la table élémentaire en fonction de la somme de poids associés aux serveurs de stockage. Par exemple, L$_{TABLE}$ = $\Sigma_{i=1..M}$(WS$_i$). Si WS$_i$ prend valeur entre 0 et 10 (CS$_{max}$ = PS$_{max}$ = 10), alors la longueur de table vaut au plus 10.M.

Puis, à l'étape 62 un index 'x' est initialisé à 1. Cet index est utilisé dans la boucle de l'algorithme décrite après, pour traiter l'ensemble des serveurs de stockage : x=1...M.

Puis à l'étape 63, une fréquence de répétition F$_x$ est déterminée pour chaque serveur de stockage en fonction du poids WS$_x$ associé au serveur de stockage S$_x$ considéré. Comme utilisée par la suite, F$_x$ est représentative d'une fréquence d'occurrence du serveur de stockage S$_x$ dans la table élémentaire de répartition TABLE$_E$, lorsqu'il s'agira de la créer.

Ainsi, plus le poids WS$_x$ est élevé (serveur de confiance et/ou performant), plus la fréquence de répétition peut être choisie élevée afin de favoriser les serveurs de confiance et/ou performants.

Par exemple, $1/F_x = L(L_{TABLE} / WS_x)]$. En d'autres termes, on envisage de répéter le serveur Si toutes les $[(L_{TABLE} / WS_x)]$ positions à l'intérieur de la table $TABLE_E$.

Puis aux étapes suivantes, la table $TABLE_E$ est formée en répétant $WS_x$ fois chaque serveur $S_x$ avec une fréquence $F_x$.

Par exemple à l'étape 64, on initialise le remplissage de $TABLE_E$ pour le serveur $S_x$ par $TABLE_E(x) = x$. La première position dans la table élémentaire $TABLE_E$ renseigne donc le serveur $S_1$.

Si cette entrée de la table est déjà utilisée, on prend la première entrée disponible suivant $TABLE_E(x)$.

La position de l'entrée renseignée est mémorisée dans une variable 'z'. En outre, on initialise un compteur du nombre d'occurrences NBOCC à 1.

Puis on vérifie à l'étape 65 si toutes les occurrences du serveur $S_x$ ont été ajoutées à la table $TABLE_E$: « NBOCC = $WS_x$ ? ».

Dans la négative, l'étape 66 prévoit de renseigner l'occurrence suivante du serveur $S_x$ dans la table $TABLE_E$.

Pour ce faire, la position de l'entrée suivante est déterminée :

$$z \leftarrow (z + 1/F_x) \bmod(L_{TABLE}).$$

Si l'entrée correspondante $TABLE_E(z)$ est déjà renseignée, à nouveau on prend la première entrée disponible suivante (en rebouclant au début de la table si nécessaire), auquel cas on mémorise son index dans la variable z.

Puis, l'entrée $TABLE_E(z)$ est renseignée pour indiquer le serveur de stockage $S_x$: $TABLE_E(z) = x$, et la variable NBOCC est incrémentée.

Le procédé reboucle alors sur l'étape 65 permettant de remplir toutes les occurrences du serveur $S_x$ dans la table élémentaire $TABLE_E$.

Lorsque toutes ces occurrences ont été renseignées (sortie 'oui' du test 65), l'étape 67 détermine si tous les serveurs ont été traitées : « x=M ? », auquel cas le procédé de la **figure 6** prend fin. Dans la négative, le serveur de stockage suivant est considéré en incrémentant l'index x (étape 68) avant de reboucler sur l'étape 63.

Compte tenu de la définition de $L_{TABLE}$, toutes les entrées de la table $TABLE_E$ renseignent au final un serveur de stockage.

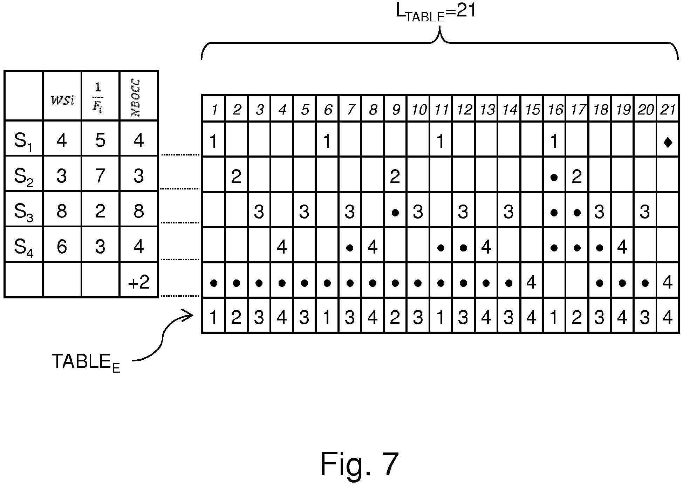

La **figure 7** illustre le processus de la **figure 6** pour M=4 serveurs, avec les poids suivants $WS_1$=4, $WS_2$=3, $WS_3$=8 et $WS_4$=6. La table élémentaire $TABLE_E$ est remplie en répétant, pour chaque serveur $S_i$ itérativement considéré et en fonction de sa fréquence de répétition déterminée ($F_i$), une occurrence du serveur au sein de la table élémentaire jusqu'à atteindre un nombre de répétition NBOCC égal au poids $WS_i$ associé au serveur considéré.

L'étape 61 permet d'obtenir $L_{TABLE}$ = 4+3+8+6 = 21

La première boucle (x=1) des étapes 63 à 66 permet d'obtenir

$$1/F_1 = \lfloor (L_{TABLE} / WS_1) \rfloor = \lfloor 21/4 \rfloor = 5$$

Puis d'avoir $TABLE_E(1)$=1, $TABLE_E(1+5=6)$=1, $TABLE_E(6+5=11)$=1 et $TABLE_E(11+5=16)$=1. Comme à ce stade NBOCC=4=$WS_1$, aucune autre occurrence du serveur $S_i$ n'est ajoutée à la table élémentaire de répartition $TABLE_E$, et notamment au niveau de l'entrée $TABLE_E(16+5=21)$ identifiée, sur la figure, par le sigle '♦'.

Lors de la deuxième boucle (x=2), $1/F_2$ = [21/3] = 7, puis $TABLE_E(2)$=2, $TABLE_E(2+7=9)$=2. Comme l'entrée $TABLE_E(16)$ est déjà renseignée (pour le serveur $S_1$), cette entrée est passée (puce '●' sur la figure) et l'entrée disponible suivante est choisie $TABLE_E(17)$=3. A ce stade NBOCC atteint $WS_2$=3, ce qui finit la boucle pour le serveur $S_2$. On voit ici qu'il y a moins d'occurrences du serveur $S_2$ comparé au serveur $S_1$, en raison du fait que ce dernier présente un plus fort poids (4 contre 3).

Lors de la troisième boucle (x=3), $1/F_3$ = [21/8] = 2, puis $TABLE_E(3)$=3, $TABLE_E(5)$=3, $TABLE_E(7)$=3. Comme l'entrée $TABLE_E(9)$ est déjà renseignée (pour le serveur $S_2$), l'entrée disponible suivante est choisie $TABLE_E(10)$=3. Puis les occurrences selon $1/F_3$ sont reprises: $TABLE_E(12)$=3, $TABLE_E(14)$=3. Comme les entrées $TABLE_E(16)$ et $TABLE_E(17)$ sont déjà renseignées, l'entrée disponible suivante est choisie $TABLE_E(18)$=3. La dernière occurrence pour atteindre NBOCC=$WS_2$=3 est renseignée : $TABLE_E(20)$=3.

Enfin, lors de la quatrième boucle (x=4), $1/F_4$ = [21/6] = 3, puis $TABLE_E(4)$=4, $TABLE_E(8)$=4 (puisque $TABLE_E(7)$ est déjà renseignée), $TABLE_E(13)$=4 (puisque $TABLE_E(11)$ et $TABLE_E(12)$ sont déjà renseignées), $TABLE_E(19)$=4 (puisque $TABLE_E(16)$ à $TABLE_E(18)$ sont déjà renseignées). Comme $z+1/F_4$=22 est supérieur à $L_{TABLE}$, on reboucle sur le début de la table élémentaire $TABLE_E$ où l'on trouve la première entrée disponible $TABLE_E(15)$ pour y renseigner le serveur $S_4$. Enfin, la dernière occurrence du serveur $S_4$ est renseignée dans la dernière entrée disponible $TABLE_E(21)$.

On obtient ainsi la table élémentaire $TABLE_E$ entièrement remplie, laquelle peut être utilisée à l'étape 32 décrite ci-dessus.

Le procédé d'accès à une donnée sauvegardée selon l'algorithme de la **figure 3** est maintenant décrit en référence à la **figure 8**. Comme évoqué précédemment, cet algorithme comporte un mécanisme permettant de gérer les risques d'ambiguïté relatifs au passage d'une transition d'un instant temporel au suivant, lors de la réception d'une requête d'accès à la donnée DATA.

L'algorithme commence à l'étape 80 par la réception d'une requête d'accès à la donnée DATA par un utilisateur U. Si nécessaire, les mécanismes de division, redondance et entrelacement (étape 31) de la donnée DATA sont mis en oeuvre aux fins notamment de connaître le nombre Nb' de blocs de données $D'_i$ à récupérer.

Une variable 'loop' est initialisée à 0, pour servir de mécanisme de gestion des transitions temporelles.

L'instant temporel Tu de réception de la requête est mémorisé.

Les étapes suivantes permettent d'identifier les serveurs de stockage mémorisant, à cet instant temporel, les blocs de données formant la donnée DATA à accéder.

Notamment, à l'étape 81, la table élémentaire $TABLE_E$ est obtenue de façon similaire à l'étape 32. Puis à l'étape 82, la clé privée K de l'utilisateur est obtenue de façon similaire à l'étape 33. Puis à l'étape 83, les serveurs de stockage des blocs de données $D'_i$ sont déterminés de façon similaire à l'étape 34, pour l'instant temporel Tu.

A l'étape 84, les blocs de données $D'_i$ sont récupérés de ces serveurs de stockage déterminés, par des mécanismes classiques (par exemple des requêtes sécurisées). Puis, lors de l'étape 85, la donnée DATA est reformée à partir des blocs $D'_i$ ainsi récupérés.

L'étape suivante, 86, consiste à vérifier la cohérence du résultat de l'étape 85. Plusieurs éléments peuvent être vérifiés afin d'identifier une éventuelle erreur. Par exemple, la vérification peut porter sur l'indentification de l'utilisateur U qui doit être identique à celle indiquée dans la donnée DATA reformée (par exemple si la donnée DATA est cryptée, l'utilisation d'une clé publique de l'utilisateur U permet de vérifier l'authenticité). Selon un autre exemple, une vérification de sommes de contrôle peut être menées (par exemple si la fin de la donnée DATA consiste en une somme de contrôle du reste de la donnée). D'autres vérifications peuvent être menées comme la datation du dernier stockage mémorisée par rapport à une traçabilité mémorisées des opérations effectuées pour cet utilisateur.

En cas d'incohérence ou d'erreur constatée sur la donnée reformée à partir des blocs de données récupérés (test 87), le procédé se poursuit au test 88 pour vérifier si l'on vient de tester les données à l'instant temporel Tu (loop=0) ou à l'instant temporel suivant Tu+1 (loop=1). Si loop=0, on incrémente l'instant temporel Tu : Tu←Tu+1 à l'étape 89 et on reboucle sur l'étape 83 de sorte à identifier de nouveaux serveurs de stockage mémorisant, à l'instant temporel suivant (celle suivant immédiatement l'instant temporel de réception de la requête d'accès), les blocs de données, puis à récupérer (étape 84) les blocs de données depuis les nouveaux serveurs de stockage respectifs ainsi identifiés, pour reformer (étape 85) ladite donnée.

Si loop=1 (test 88), alors un message d'erreur est retourné à l'utilisateur en réponse à sa requête (étape 90).

En l'absence d'erreur au test 87, la donnée reformée est retournée à l'utilisateur en réponse à sa requête (étape 91).

On voit que si la donnée DATA ne peut être correctement reconstituée à l'aide du schéma de répartition des blocs $D'_i$ à l'instant temporel Tu, on la reconstitue à l'aide du schéma de répartition valable pour l'instant temporel suivant Tu+1. Ainsi, même si la requête d'accès est reçue proche d'une transition temporelle par laquelle les blocs de données $D'_i$ sont déplacés de serveurs, le procédé permet de récupérer de façon sécurisée ladite donnée DATA.

Les modes de réalisation de l'invention qui viennent d'être décrits permettent de déterminer, dans un réseau étendu, des localisations virtuelles de sauvegarde répartie selon une ou plusieurs lois de répartition dynamiques. Cette approche offre un haut niveau de sécurisation d'une donnée sauvegardée de façon répartie. Divers mécanismes permettent d'améliorer cette sécurisation, tels que la redondance de blocs de données, l'utilisation de l'identité de l'utilisateur pour faire varier certains paramètres.

Les exemples qui précèdent ne sont que des modes de réalisation de l'invention qui ne s'y limite pas.

**Revendications**

**1.** Procédé de stockage d'une donnée (DATA) associée à un utilisateur dans un réseau informatique (20) comprenant une pluralité de serveurs de stockage (Si), le procédé comprenant les étapes suivantes :

diviser (31) la donnée pour obtenir une pluralité de blocs de données ($D_i$, $D'_i$) ;
déterminer (34), pour chaque bloc de données, un serveur respectif parmi la pluralité de serveurs de stockage ; et
mémoriser (35) chaque bloc de données au niveau du serveur de stockage respectif,
**caractérisé en ce que** la détermination du serveur respectif est fonction d'un instant temporel courant (Tu).

**2.** Procédé selon la revendication 1, dans lequel un nouveau serveur de stockage respectif est déterminé, à chaque nouvel instant temporel, pour chaque bloc de données, de sorte à mémoriser le bloc de données au niveau d'un nouveau serveur de stockage à chaque nouvel instant temporel.

3. Procédé selon la revendication 2, comprenant, en outre, les étapes suivantes en réponse à une requête d'accès à la donnée associée à l'utilisateur :

identifier (83) des serveurs de stockage mémorisant, à un instant temporel donné (Tu), les blocs de données ;
récupérer (84) les blocs de données ($D_i$, $D'_i$) depuis les serveurs de stockage respectifs ainsi identifiés, pour reformer ladite donnée (DATA) ; et
en cas de détection d'une erreur sur la donnée reformée à partir des blocs de données récupérés, identifier de nouveaux serveurs de stockage mémorisant, à un instant temporel suivant, les blocs de données, puis récupérer les blocs de données depuis les nouveaux serveurs de stockage respectifs ainsi identifiés, pour reformer ladite donnée.

4. Procédé selon l'une des revendications 1 à 3, dans lequel la détermination du serveur respectif est en outre fonction d'une clé binaire privée (K) associée à l'utilisateur.

5. Procédé selon la revendication 4, dans lequel l'étape de détermination des serveurs de stockage comprend une étape (42) consistant à appliquer la clé binaire comme masque (MASK) à une première table de répartition des serveurs (TABLE1) pour identifier des serveurs de stockage à utiliser pour une partie des blocs de données respectifs, ladite première table de répartition des serveurs associant un serveur à chaque bloc de données.

6. Procédé selon la revendication 5, dans lequel l'étape de détermination des serveurs de stockage comprend en outre une étape (45) consistant à appliquer un complémentaire de la clé binaire comme masque (MASK2) à une deuxième table de répartition des serveurs (TABLE2) pour identifier des serveurs de stockage à utiliser pour les autres blocs de données respectifs, ladite deuxième table de répartition des serveurs associant un serveur à chaque bloc de données et étant formée à partir d'une même table élémentaire ($TABLE_E$) que la première table de répartition des serveurs.

7. Procédé selon la revendication 5 ou 6, dans lequel le masque formé de la clé binaire est décalé relativement à la première ou deuxième table de répartition des serveurs d'un nombre de positions fonction de l'instant temporel courant, avant d'être appliqué à la première ou deuxième table de répartition des serveurs.

8. Procédé selon l'une des revendications 5 à 7, dans lequel le masque est formé d'une répétition de la clé binaire de sorte à atteindre la taille (Nb') de la première ou deuxième table de répartition des serveurs.

9. Procédé selon l'une des revendications 5 à 8, dans comprenant en outre une étape de détermination (32) d'une table élémentaire de répartition des serveurs ($TABLE_E$) par duplication de laquelle la ou les tables de répartition des serveurs sont obtenues,
procédé dans lequel l'étape de détermination de la table élémentaire est fonction d'un indice de performance ($PS_i$) associé à chaque serveur de stockage et d'un indice de confiance ($CS_i$) associé à la localisation géographique ($LS_i$) de chaque serveur de stockage.

10. Procédé selon la revendication 9, dans lequel la longueur ($LT_{ABLE}$) de la table élémentaire est fonction de la somme de poids ($WS_i$) associés aux serveurs de stockage, le poids associé à un serveur de stockage étant déterminé à partir des indices de performance et de confiance du serveur de stockage considéré.

11. Procédé selon la revendication 9 ou 10, dans lequel l'étape de détermination de la table élémentaire comprend les étapes suivantes :

déterminer (63), pour chaque serveur de stockage, une fréquence ($F_i$) de répétition d'une occurrence du serveur de stockage dans la table élémentaire en fonction du poids associé audit serveur de stockage considéré ;
remplir (64, 66) la table élémentaire en répétant, pour chaque serveur itérativement considéré et en fonction de sa fréquence de répétition déterminée, une occurrence du serveur au sein de la table élémentaire jusqu'à atteindre (65) un nombre de répétition (NBOCC) égal au poids associé au serveur considéré.

12. Procédé selon l'une des revendications 1 à 11, dans lequel l'étape de division de la donnée comprend les étapes suivantes :

diviser la donnée (DATA) en des blocs élémentaires de données ($D_i$) ;
dupliquer les blocs élémentaires en des blocs dupliqués ;
entrelacer les blocs dupliqués de sorte à obtenir ladite pluralité de blocs de données ($D'_i$).

13. Système de stockage d'une donnée (DATA) associée à un utilisateur dans un réseau informatique (20) comprenant une pluralité de serveurs de stockage (Si), le système comprenant au moins un microprocesseur (110) configuré pour exécuter, dans un environnement d'exécution du système, les étapes suivantes :

diviser la donnée pour obtenir une pluralité de blocs de données ($D_i$, $D'_i$) ;
déterminer, pour chaque bloc de données, un serveur respectif parmi la pluralité de serveurs de stockage ; et
mémoriser chaque bloc de données au niveau du serveur de stockage respectif,
**caractérisé en ce que** la détermination du serveur respectif est fonction d'un instant temporel courant (Tu).

14. Système selon la revendication 13, dans lequel le microprocesseur est en outre configuré pour déterminer un nouveau serveur de stockage respectif à chaque nouvel instant temporel et pour chaque bloc de données, de sorte à mémoriser le bloc de données au niveau d'un nouveau serveur de stockage à chaque nouvel instant temporel.

15. Système selon la revendication 13 ou 14, dans lequel la détermination du serveur respectif est en outre fonction d'une clé binaire privée (K) associée à l'utilisateur.

Fig. 1

Fig. 2

Recevoir requête stockage DATA — 30

↓

Diviser DATA en blocs — 31

↓

Obtenir TABLE$_E$ — 32

↓

Obtenir K — 33

↓

Tu → Déterminer les serveurs de stockage en fonction de Tu — 34

↓

Sauvegarder les blocs sur les serveurs — 35

↓

oui ← Nouvel instant temporel Tu ? — 36

non

## Fig. 3

| TABLE$_E$ | LENGTH |

→ Obtenir TABLE1 — 40

Tu →
K → Obtenir MASK — 41

Masquer TABLE1 avec MASK — 42

Obtenir TABLE2 — 43

Obtenir MASK2 — 44

Masquer TABLE2 avec MASK2 — 45

Obtenir grille RESULT de localisation des serveurs — 46

Fig. 4

blocs de DATA: D'₄ ... D'₄₁

EP 3 153 961 A1

**Fig. 5**

TABLE_E: 1 2 3 4 3 1 3 4 2 3 1 3 4 3 4 1 2 3 4 3 4

TABLE1: 1 2 3 4 3 1 3 4 2 3 1 3 4 3 4 1 2 3 4 3 4 1 2 3 4 3 1 3 4 2 3 1 3 4 3 4 1 2 3 4 3 ✗

TABLE2: 4 1 2 3 4 3 1 3 4 2 3 1 3 4 3 4 1 2 3 4 3 4 1 2 3 4 3 1 3 4 2 3 1 3 4 3 4 1 2 3 4 3 ✗ 4

K: 0 1 1 0 1 0 0 0 1 1 1 0 1 0 1 0 1 1 1 1 0 1 0 0 0 1 1 1 0 1 0 1

K<<Tu Tu=3: 0 1 1 0 1 0 0 0 1 1 1 0 1 0 1 0 1 0 1 1 1 1 0 1 0 0 0 1 1 1 0 1 0 1

MASK: 0 0 1 0 1 1 0 1 0 0 0 1 1 1 0 1 0 1 0 1 0 1 1 1 1 0 1 0 0 0 1 1 1 0 1 0 1 0 1 0 1 1 0 1 0 0 ✗ 0 1 1 ...

TABLE1: 1 2 3 4 3 1 3 4 2 3 1 3 4 3 4 1 2 3 4 3 4 1 2 3 4 3 1 3 4 2 3 1 3 4 3 4 1 2 3 4 3

RESULT1: 3 3 1 4 3 4 3 1 3 3 4 1 2 4 4 2 3 3 3 1 2 4

MASK2: 1 1 0 1 0 0 1 0 1 1 1 0 0 0 1 0 1 0 1 0 0 0 0 1 0 1 1 1 0 0 0 1 0 1 0 1 0 0 1 0 1

TABLE2: 4 1 2 3 4 3 1 3 4 2 3 1 3 4 3 4 1 2 3 4 3 4 1 2 3 4 3 1 3 4 2 3 1 3 4 3 4 1 2 3 4

RESULT2: 4 1 3 1 4 2 3 3 1 3 2 4 3 1 3 3 3 2 4

RESULT: 4 1 3 3 3 1 1 4 4 2 3 3 4 3 3 1 1 3 3 3 4 1 2 2 4 4 3 1 4 2 3 3 3 3 3 3 1 2 2 4 4

**Fig. 6**

$L_{TABLE}=21$

| | $WSi$ | $\frac{1}{F_i}$ | $NBOCC$ | | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|---|---|---|---|---|---|---|---|---|---|---|---|---|---|---|---|
| $S_1$ | 4 | 5 | 4 | | 1 | | | | | 1 | | | | | 1 | | | | | 1 | | | | | ♦ |
| $S_2$ | 3 | 7 | 3 | | | 2 | | | | | | | 2 | | | | | | | • | 2 | | | | |
| $S_3$ | 8 | 2 | 8 | | | | 3 | | 3 | | 3 | | • | 3 | | 3 | | 3 | | • | • | 3 | | 3 | |
| $S_4$ | 6 | 3 | 4 | | | | | 4 | | | • | 4 | | | • | • | 4 | | | • | • | • | 4 | | |
| | | | +2 | | • | • | • | • | • | • | • | • | • | • | • | • | • | • | 4 | | | • | • | • | 4 |
| | | | | | 1 | 2 | 3 | 4 | 3 | 1 | 3 | 4 | 2 | 3 | 1 | 3 | 4 | 3 | 4 | 1 | 2 | 3 | 4 | 3 | 4 |

$TABLE_E$

## Fig. 7

| Recevoir requête accès DATA<br>loop=0<br>Tu | 80 |

| Obtenir TABLE$_E$ | 81 |

| Obtenir K | 82 |

| Déterminer les serveurs de<br>stockage en fonction de Tu | 83 |

| Récupérer blocs sur les serveurs | 84 |

| Reformer DATA | 85 |

89

| Tu ++ |

| Contrôler cohérence de DATA | 86 |

oui

loop=0 ? — 88

Erreur ? — 87

oui

non

non

| Retourner<br>message d'erreur | 90 |

| Retourner DATA | 91 |

## Fig. 8

Europäisches
Patentamt

European
Patent Office

Office européen
des brevets

## RAPPORT DE RECHERCHE EUROPEENNE

Numéro de la demande

EP 15 30 6582

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br>A | US 2007/073990 A1 (SNAMAN WILLIAM E JR [US] ET AL) 29 mars 2007 (2007-03-29)<br>* abrégé *<br>* alinéa [0011] - alinéa [0012] *<br>* alinéa [0017] - alinéa [0023]; figures 1-3 *<br>----- | 1-9,<br>12-15<br>10,11 | INV.<br>G06F3/06 |
| X | US 2008/033881 A1 (FICCO MICHAEL H [US]) 7 février 2008 (2008-02-07)<br>* abrégé *<br>* alinéa [0026] - alinéa [0035] *<br>* alinéa [0044] - alinéa [0045] *<br>* alinéa [0080] - alinéa [0082] *<br>----- | 1-5,13,<br>14 | |
| X | US 2004/003173 A1 (YAO SHU-YUEN DIDI [US] ET AL) 1 janvier 2004 (2004-01-01)<br>* abrégé *<br>* alinéa [0014] - alinéa [0025] *<br>----- | 1-3,13,<br>14 | |
| A | US 2013/054920 A1 (SATO KATSUYA [JP] ET AL) 28 février 2013 (2013-02-28)<br>* abrégé *<br>* alinéa [0009] *<br>----- | 1-3,13,<br>14 | DOMAINES TECHNIQUES RECHERCHES (IPC)<br><br>G06F |

Le présent rapport a été établi pour toutes les revendications

| Lieu de la recherche | Date d'achèvement de la recherche | Examinateur |
|---|---|---|
| La Haye | 17 mars 2016 | Coenen, Jean Pierre |

EPO FORM 1503 03.82 (P04C02)

**EP 3 153 961 A1**

## ANNEXE AU RAPPORT DE RECHERCHE EUROPEENNE
## RELATIF A LA DEMANDE DE BREVET EUROPEEN NO.

EP 15 30 6582

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-03-2016

| Document brevet cité au rapport de recherche | Date de publication | Membre(s) de la famille de brevet(s) | Date de publication |
|---|---|---|---|
| US 2007073990 A1 | 29-03-2007 | AUCUN | |
| US 2008033881 A1 | 07-02-2008 | AUCUN | |
| US 2004003173 A1 | 01-01-2004 | AUCUN | |
| US 2013054920 A1 | 28-02-2013 | US 2013054920 A1<br>WO 2013030864 A1 | 28-02-2013<br>07-03-2013 |

EPO FORM P0460

Pour tout renseignement concernant cette annexe : voir Journal Officiel de l'Office européen des brevets, No.12/82

**EP 3 153 961 A1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2433216 A